# EUROPEAN PATENT APPLICATION

(11) **EP 4 246 478 A1**
(43) Date of publication of application: **20.09.2023**
(21) Application number: 22216120.0
(22) Date of filing: 22.12.2022
(51) Int. Cl.: G07F 19/00, G07D 11/24, G07D 11/245, G06Q 20/36, G07F 9/02

(54) **FINANCIAL TRANSACTION SYSTEM AND MEDIUM MANAGEMENT METHOD IN THE FINANCIAL TRANSACTION SYSTEM**

(30) Priority: 18.03.2022 KR 20220033705
(71) Applicant: HYOSUNG TNS INC., Gangnam-gu, Seoul 06349 (KR)
(72) Inventor: SHIN, Dahye, Seoul 06349 (KR); LIM, Jin Yu, Seoul 06349 (KR); JANG, Hyun Soo, Seoul 06349 (KR); PARK, Chang Ho, Seoul 06349 (KR)
(74) Representative: V.O.

(57) **Abstract**

A financial transaction system includes: an automated teller machine providing medium stack information; a bank server that calculates provisional replenishment number information; and a medium management unit that prepares a transit cassette containing mediums required in replenishment transaction, and inputs the provisional replenishment number information in a memory of the prepared transit cassette. When the mediums in the transit cassette are replenished, the bank server calculates actual replenishment number information based on current medium stack information received from the automated teller machine, and provides the calculated actual replenishment number information to the automated teller machine. The automated teller machine controls a conveyance path for the mediums so that the mediums are replenished from the transit cassette based on the actual replenishment number information and mediums as non-replenishment banknotes are recovered to the transit cassette, and provides non-replenishment banknote number information recovered in the transit cassette to the bank server.

## Description

### TECHNICAL FIELD

The present disclosure relates to a financial transaction system and a medium management method in the financial transaction system.

### BACKGROUND

In general, an automated teller machine (ATM) is a device installed in a place other than a window in a financial institution such as a bank so that customers can conveniently use various financial services without restriction of time and place. The automated teller machine can provide various financial services such as cash deposit/withdrawal, account transfer, balance inquiry, and passbook printing.

Such an automated teller machine may include therein a medium storage box for storing mediums such as cash or checks, and a proper amount of mediums may be stored in the medium storage box. A medium stored in the medium storage box may be discharged from the medium storage box by a customer's request for withdrawal, and a new medium may be introduced into the medium storage box by a customer's request for deposit. As such, a proper amount of the mediums stored in the medium storage box need to be maintained in preparation for a customer's request for deposit or withdrawal, and it is necessary to manage and monitor whether a proper amount of mediums is stored in the medium storage box in real time.

However, when a medium management unit (e.g., cash-in-transit (CIT) company) for replenishing the automated teller machine with mediums is far away from the automated teller machine, it is not easy for the management company to manage the amount of mediums in the automated teller machine in real time.

For example, in the case that the mediums in the automated teller machine are insufficient, the mediums in the automated teller machine may become sufficient with mediums deposited by a customer while a CIT staff of the medium management unit goes to replenish the automated teller machine with new mediums. Further, in the case that the mediums in the automated teller machine are excessive, the mediums in the automated teller machine may become insufficient by a customer's withdrawal while a CIT staff of the medium management unit goes to recover some of the mediums in the automated teller machine.

In particular, upon calculation of mediums after the replenishment of mediums for the automated teller machine is completed, it is difficult to accurately identify rejection banknotes stored in the automated teller machine, which makes it difficult to accurately compare the calculation result of a bank server and the actual calculation result.

### SUMMARY

In view of the above, the present disclosure provides a financial transaction system and a medium management method in the financial transaction system, which when an automated teller machine is replenished with mediums through a transit cassette, utilizes medium information on types of banknotes and the number of each type of banknotes provided by the transit cassette in current calculation of the mediums.

In accordance with a first aspect of the present disclosure, there is provided a financial transaction system including: an automated teller machine that stores mediums for deposit or withdrawal of a customer and provides medium stack information for a stack amount of the mediums; a bank server that calculates provisional replenishment number information for mediums required to be replenished in the automated teller machine based on the medium stack information received from the automated teller machine; and a medium management unit that prepares a transit cassette containing mediums required in replenishment transaction based on the provisional replenishment number information provided from the bank server, and inputs the provisional replenishment number information in a memory of the prepared transit cassette, wherein when the mediums in the transit cassette are replenished in the automated teller machine, the bank server calculates actual replenishment number information for mediums required to be replenished in the automated teller machine based on current medium stack information received from the automated teller machine, and provides the calculated actual replenishment number information to the automated teller machine, and wherein the automated teller machine controls a conveyance path for the mediums so that the mediums are replenished from the transit cassette based on the actual replenishment number information and mediums as non-replenishment banknotes which need not to be replenished in the automated teller machine are recovered to the transit cassette, and provides non-replenishment banknote number information for the non-replenishment banknotes recovered in the transit cassette to the bank server.

The bank server may calculate replenishment rejection banknote information for rejection banknotes remaining in the automated teller machine based on the provisional replenishment number information, the actual replenishment number information, and the non-replenishment banknote number information.

The bank server may compare a preset appropriate stack information for mediums in the automated teller machine and the medium stack information and calculate a difference value between the appropriate stack information and the medium stack information as the provisional replenishment number information.

The automated teller machine may include: a safe having an entrance for replenishment and recovery to which a transit cassette is to be connected; a reception unit through which deposit or withdrawal of a medium is made; an identification unit serving to identify whether a medium is a normal banknote, a rejection banknote, or a non-replenishment banknote; a recycle cassette in which the medium recognized as the normal banknote is to be stored; a utility cassette in which various types of mediums are to be stored for universal purposes; a conveyance path through which the medium is conveyed between the entrance for replenishment and recovery, the reception unit, the identification unit, the recycle cassette, and the utility cassette; and a control unit configured to control the conveyance path such that when the medium is recovered through the transit cassette, among mediums stored in the transit cassette, the medium recognized as the normal banknote by the identification unit is accommodated in the recycle cassette, the medium recognized as the rejection banknote by the identification unit is accommodated in the utility cassette and the medium recognized as the non-replenishment banknote by the identification unit is recovered to the transit cassette.

The bank server may calculate a difference value obtained by subtracting the actual replenishment number information and the non-replenishment banknote number information from the provisional replenishment number information as replenishment rejection banknote number information for rejection banknotes remaining in the utility cassette.

In accordance with a second aspect of the present disclosure, there is provided a medium management method in a financial transaction system, including: a stack amount providing step in which an automated teller machine provides medium stack information for a stack amount of mediums to a bank server; a replenishment request step in which the bank server calculates provisional replenishment number information for mediums required to be replenished in the automated teller machine based on the medium stack information, and provides the calculated provisional replenishment number information to a medium management unit to request replenishment of mediums; a replenishment preparation step in which the medium management unit accommodates mediums required for replenishment transaction in a transit cassette based on the provisional replenishment number information, and inputs the provisional replenishment number information in the transit cassette; a medium information confirmation step in which when the transit cassette is connected to the automated teller machine, the transit cassette provides the provisional replenishment number information to the automated teller machine, and the automated teller machine provides current medium stack information to the bank server; a replenishment confirmation step in which the bank server calculates actual replenishment number information for mediums required to be replenished in the automated teller machine based on the current medium stack information, and provides the calculated actual replenishment number information to the automated teller machine; a replenishment progress step in which the automated teller machine is replenished with mediums from the transit cassette based on the actual replenishment number information, and non-replenishment banknotes that need not to be replenished are recovered to the transit cassette; and a non-replenishment information confirmation step in which the medium management unit confirms non-replenishment banknote number information for the non-replenishment banknotes recovered in the transit cassette.

The medium management method may further include: a rejection banknote number calculation step of calculating the number of rejection banknotes remaining in the automated teller machine based on the provisional replenishment number information, the actual replenishment number information, and the non-replenishment banknote number information.

The replenishment request step may include comparing a preset appropriate stack information for mediums in the automated teller machine and the medium stack information and calculating a difference value between the appropriate stack information and the medium stack information as the provisional replenishment number information.

The replenishment progress step may include controlling, when the mediums in the transit cassette are replenished in the automated teller machine, a conveyance path in the automated teller machine so that the mediums are replenished from the transit cassette by an amount of mediums obtained based on the actual replenishment number information and mediums as non-replenishment banknotes which need not to be replenished in the automated teller machine are recovered to the transit cassette, and providing non-replenishment banknote number information for the non-replenishment banknotes recovered in the transit cassette to the bank server

The rejection banknote number calculation step may include calculating a difference value obtained by subtracting the actual replenishment number information and the non-replenishment banknote number information from the provisional replenishment number information as replenishment rejection banknote information for rejection banknotes remaining in the automated teller machine.

According to embodiments of the present disclosure, the provisional replenishment number information for such as types of mediums and the number of each type of mediums is input in the memory of the transit cassette, and when an automated teller machine is replenished with mediums through the transit cassette, the provisional information on the replenished mediums provided by the transit cassette can be used for the replenishment of mediums and the current calculation of mediums.

In addition, according to embodiments of the present disclosure, since it is possible to determine the exact number of rejection banknotes stored in the automated teller machine, when performing the current calculation of mediums after the replenishment of the mediums for the automated teller machine is completed, it is possible to compare the calculation result of the bank server and the actual calculation result to confirm the accurate comparison.

Further, according to embodiments of the present disclosure, among the replenishment banknotes stored in the transit cassette, normal banknotes can be replenished into the recycle cassette, rejection banknotes can be transferred to the utility cassette installed in the lower portion of the safe, and non-replenishment banknotes can be recovered to the transit cassette.

Furthermore, according to embodiments of the present disclosure, it is possible to reduce costs as the transit cassette that contains no rejection banknote can be used again for replenishment transactions without separate settlement.

### BRIEF DESCRIPTION OF THE DRAWINGS

FIG. 1 is a block diagram schematically illustrating a financial transaction system according to one embodiment of the present disclosure.
FIG. 2 is a state diagram illustrating a flow of a medium in the financial transaction system according to one embodiment of the present disclosure.
FIG. 3 is a state diagram illustrating an example of the flow of the medium in the financial transaction system according to one embodiment of the present disclosure.
FIG. 4 is a block diagram illustrating an example of an automated teller machine applied to the financial transaction system according to one embodiment of the present disclosure.
FIG. 5 is a flowchart schematically illustrating a medium management method in the financial transaction system according to one embodiment of the present disclosure.

### DETAILED DESCRIPTION

Hereinafter, a configuration and operation according to an embodiment of the present disclosure will be described in detail with reference to the accompanying drawings.

Further, in describing the present disclosure, detailed descriptions of known configurations or functions may be omitted to clarify the present disclosure.

When an element is referred to as being 'connected' to or 'transferred' to another element, it should be understood that the element may be directly connected to or transferred to the other element, but that other elements may exist in the middle.

The terms used in the present disclosure are only used for describing specific embodiments, and are not intended to limit the present disclosure. Singular expressions include plural expressions unless the context clearly indicates otherwise.

Terms including ordinal numbers, such as first and second, may be used for describing various elements, but the corresponding elements are not limited by these terms. These terms are only used for the purpose of distinguishing one element from another element.

In the present specification, it is to be understood that the terms such as "including" are intended to indicate the existence of the certain features, areas, integers, steps, actions, elements, combinations, and/or groups thereof disclosed in the specification, and are not intended to preclude the possibility that one or more other certain features, areas, integers, steps, actions, elements, combinations, and/or groups thereof may exist or may be added.

Hereinafter, a specific configuration of a financial transaction system 1 according to one embodiment of the present disclosure will be described with reference to the drawings.

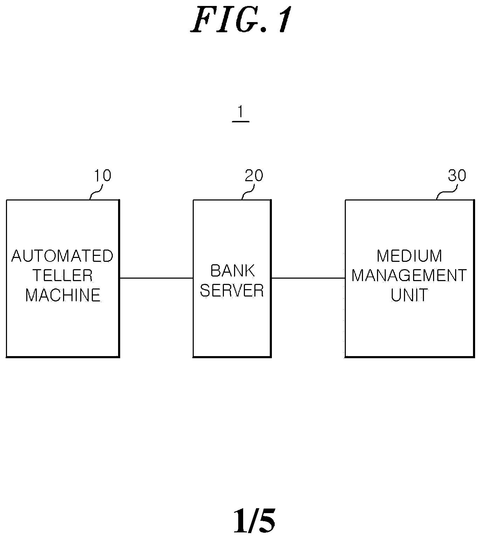

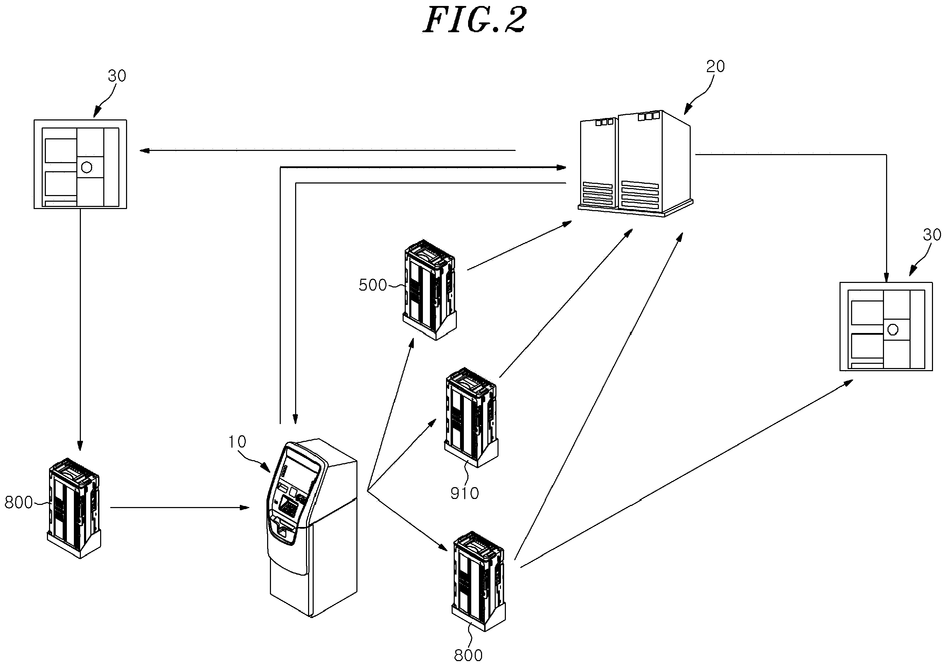

As shown in FIGS. 1 to 3, in the financial transaction system 1 according to one embodiment of the present disclosure, information on types of mediums and the number of each type of mediums may be input in a memory of a transit cassette 800, and when the mediums in the transit cassette 800 is replenished in an automated teller machine 10, information on the type and the number of mediums provided by the transit cassette 800 may be utilized for the replenishment of mediums and current calculation of mediums.

To this end, the financial transaction system 1 may include an automated teller machine 10, a bank server 20, and a medium management unit 30.

Specifically, the automated teller machine 10 may store therein mediums for deposit or withdrawal of a customer. The automated teller machine 10 may provide information (hereinafter, medium stack information) on an amount of the stacked mediums in a safe to the bank server 20 in real time. In addition, the automated teller machine 10 may receive information on the number of mediums currently required to be replenished in the automated teller machine 10 from the bank server 20.

When the automated teller machine 10 is replenished with mediums through the transit cassette 800, based on an actual replenishment number information, the automated teller machine 10 is replenished with mediums from the transit cassette 800 as much as the mediums corresponding to the actual replenishment number information and the replenished mediums are accommodated in the safe. Normal banknote number information for the normal banknotes accommodated in the safe may be transmitted to the bank server 20.

For non-replenishment banknotes that need not to be replenished in the safe, the automated teller machine 10 may control a conveyance path so that the non-replenishment banknotes are recovered to the transit cassette 800. In this case, the automated teller machine 10 may provide non-replenishment banknote number information for the non-replenishment banknotes recovered to the transit cassette 800 to the bank server 20.

The automated teller machine 10 may include a recycle cassette 500 for accommodating therein a normal banknote among mediums replenished through the transit cassette 800 and a utility cassette 910 for accommodating therein a rejection banknote among mediums replenished through the transit cassette 800. The specific configuration of the automated teller machine 10 including the recycle cassette 500 and the utility cassette 910 will be described later with examples.

The bank server 20 may receive medium stack information on the stack amount of mediums accommodated in the automated teller machine 10 in real time. The bank server 20 may calculate provisional replenishment number information for mediums required to be replenished in the automated teller machine 10 based on the medium stack information. For example, the bank server 20 may compare information on the stack amount corresponding to a preset appropriate number of mediums accommodated in the automated teller machine 10 (hereinafter, referred to as appropriate stack information) with the medium stack information, and then calculate information on a difference value between the appropriate stack information and the medium stack information (hereinafter, referred to as provisional replenishment number information). The calculated provisional replenishment number information may be provided to the medium management unit 30.

The bank server 20 may receive current medium stack information from the automated teller machine10 when mediums are replenished in the automated teller machine10 through the transit cassette 800. In this case, the bank server 20 may calculate a current stack amount of mediums required to be replenished in the automated teller machine 10 (hereinafter, referred to as actual replenishment number information) based on the current medium stack information received from the automated teller machine 10. The actual replenishment number information may be calculated as a difference value between the appropriate stack information and the current medium stack information. The calculated actual replenishment number information may be provided to the automated teller machine 10.

After the medium replenishment through the transit cassette 800 for the automated teller machine 10 is completed, the bank server 20 may calculate information on the number of rejection banknotes in the safe of the automated teller machine 10. For example, the bank server 20 may calculate rejection banknote number information (hereinafter, referred to as replenishment rejection banknote number information) obtained by subtracting actual replenishment number information (normal banknote number information) and non-replenishment banknote number information from the provisional replenishment number information.

In this way, in the case that the exact number of rejection banknotes accommodated in the automated teller machine 10 (replenishment rejection banknote number information) is identified, when performing the current calculation of mediums after the replenishment of the mediums for the automated teller machine 10 is completed, it is possible to perform an accurate current calculation by comparing the calculation result of the bank server and the actual calculation result.

The medium management unit 30 may receive provisional replenishment number information from the bank server 20. The medium management unit 30 may prepare a transit cassette 800 in which mediums necessary for replenishment transaction are accommodated based on the provisional replenishment number information. In addition, the medium management unit 30 may input provisional replenishment number information in the memory of the transit cassette 800.

In the case that the provisional replenishment number information is input in the memory of the transit cassette 800 at the medium management unit 30, when the automated teller machine 10 is replenished with mediums through the transit cassette 800, the transit cassette 800 may provide the provisional replenishment number information to the automated teller machine 10, and the provisional replenishment number information provided to the automated teller machine 10 may be utilized for the replenishment of mediums and the current calculation of mediums.

Hereinafter, a medium management method in the financial transaction system according to one embodiment of the present disclosure will be described in detail.

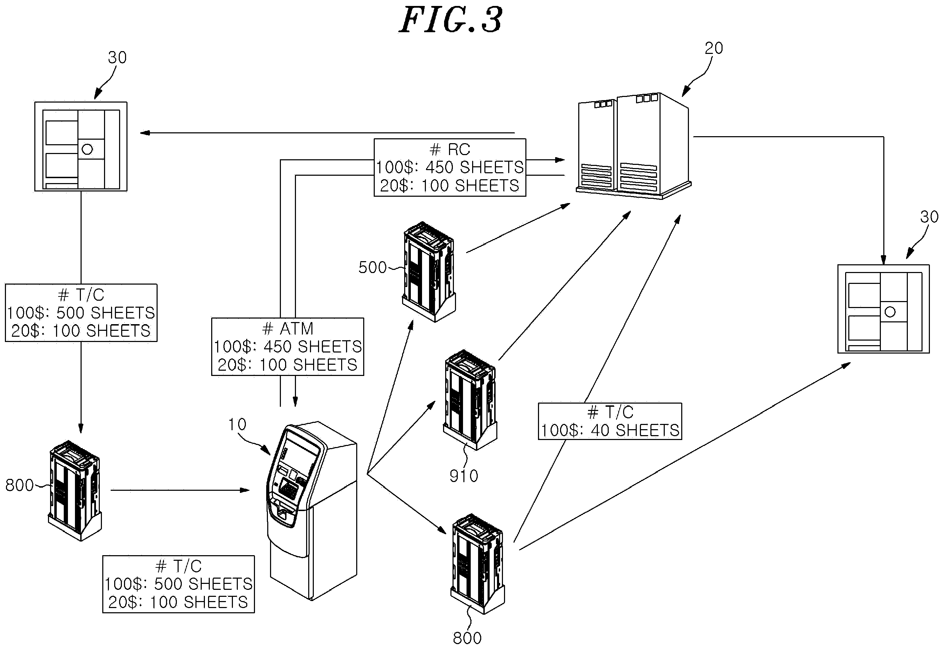

Referring to FIG. 3, the bank server 20 may monitor the stack amount of mediums in the recycle cassette 500 of the automated teller machine 10 in real time to calculate provisional replenishment number information for mediums required to be replenished in the recycle cassette 500, and by providing the calculated provisional replenishment number information to the medium management unit 30, the bank server 20 requests the medium management unit 30 to replenish mediums in the automated teller machine 10. As an example, the provisional replenishment number information required to be replenished in the recycle cassette 500 may be information about 500 sheets of 100$ bills and 100 sheets of 20$ bills.

When receiving a request for replenishment of the medium for the automated teller machine 10 from the bank server 20, the medium management unit 30 prepares the type and the number of mediums required for the recycle cassette 500 in the transit cassette 800 and inputs the provisional replenishment number information into the transit cassette 800 based on the provisional replenishment number information requested from the bank server 20.

Thereafter, when the recycle cassette 500 is transferred to the automated teller machine 10 and connected to the financial automation device 10, the automated teller machine 10 prepares a replenishment of mediums by receiving the provisional replenishment number information from the recycle cassette 500. Further, before replenishing the mediums to the financial automation device 10, the financial automation device 10 may indentify again information (actual replenishment number information) on the type and the number of mediums required for the recycle cassette 500 through the bank server 20. For example, information on the actual replenishment number information actually required to be replenished in the current recycle cassette 500 may be information about 450 sheets of 100$ bills and 100 sheets of 20$ bills.

When the medium replenishment through the recycle cassette 500 for the automated teller machine 10 is in progress, the automated teller machine 10 may transfer, among the mediums stored in the transit cassette 800, a medium recognized as a normal banknote to the recycle cassette 500 to be accommodated therein, a medium recognized as a rejection banknote to the utility cassette 910 to be accommodated therein , and a medium recognized as a non-replenishment banknote to the transit cassette 800 to be recovered therein.

When the medium replenishment through the recycle cassette 500 for the automated teller machine 10 is completed, the automated teller machine 10 confirms the normal banknote number information for the replenishment banknotes accommodated in the recycle cassette 500, and the non-replenishment banknote number information for the non-replenishment banknotes recovered to the transit cassette 800. The normal banknote number information and the non-replenishment banknote number information are provided to the bank server 20 to be recorded in the bank server 20. At this time, the normal banknote number information may be information about 450 sheets of 100$ bills, and the non-replenishment banknote number information may be information about 40 sheets of 100$ bills.

The bank server 20 may calculate replenishment rejection banknote number information based on the provisional replenishment number information, the normal banknote number information (actual replenishment number information) and the non-replenishment banknote number information. For example, when there is a difference between the provisional replenishment number information and the actual replenishment number information, the bank server 20 may be calculated a value obtained by subtracting the normal banknote number information (actual replenishment number information) and the non-replenishment banknote number information from the provisional replenishment number information as information on the number of the replenishment rejection banknotes remaining in the utility cassette 910 of the automated teller machine 10. As an example, when the provisional replenishment number information is 500 sheets of 100 $ bills and the actual replenishment number information is 450 sheets of 100 $ bills, the bank server may confirm, as the replenishment rejection banknote number information, a value of 10 sheets obtained by deducting 450 sheets and 40 sheets from 500 sheets. The confirmed replenishment rejection banknote number information is recorded in the bank server 20. The transit cassette 800, through which the medium replenishment for the automated teller machine 10 is completed, may be returned to the medium management unit 30 in a state in which the non-replenishment banknotes are recovered thereto.

Thereafter, by confirming the information (replenishment rejection banknote number information and the like) stored in the bank server 20 and the non-replenishment banknotes remaining in the transit cassette 800, the current calculation for the replenishment medium number can be completed. As an example, by comparing and confirming replenishment rejection banknote number information (10 sheets) stored in the bank server 20 and the non-replenishment banknote (10 sheets) remaining in the transit cassette 800, the current calculation for the replenishment medium number can be completed.

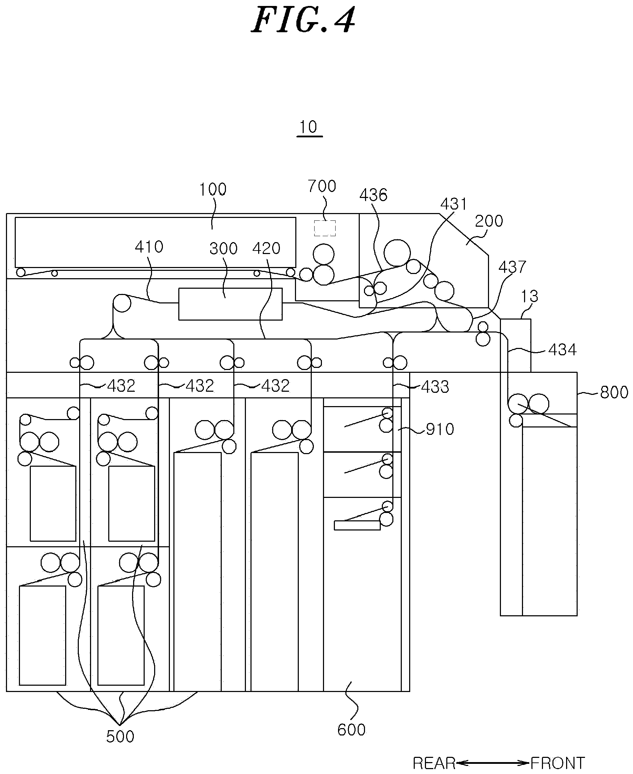

Meanwhile, as shown in FIG. 4, the automated teller machine 10 according to one embodiment of the present disclosure may include a safe, a temporary holding unit 100, a reception unit 200, an identification unit 300, a conveyance path, and a recycle cassette 500, a reject cassette 600, a control unit 700, and a utility cassette 910.

The safe may provide a storage space for storing mediums. In the present embodiment, the safe is not limited to the storage space for mediums, and the safe may include a frame/housing that provides the overall appearance of the automated teller machine 10. At a lower side of a front portion of the safe, an entrance 13 for replenishment and recovery to which the transit cassette 800 can be connected may be provided.

In the present embodiment, the transit cassette 800 is connected to the lower side of the front portion of the safe through the entrance 13 for replenishment and recovery. However, the present disclosure is not limited thereto, and according to the position of the entrance 13 for replenishment and recovery, the transit cassette 800 may be connected to a lower side of a rear portion of the safe.

The temporary holding unit 100, the reception unit 200, and the identification unit 300 may be provided in an upper portion of the safe, and the recycle cassette 500, the reject cassette 600, and the utility cassette 910 may be provided in a lower portion of the safe. The temporary holding unit 100 may be used to temporarily store a medium. The temporary holding unit 100 may be connected to an upper conveyance path 410 through a first branch conveyance path 431, which will be described later.

The reception unit 200 may provide a space in which a medium deposited by the customer is introduced, and may provide a space from which a medium to be withdrawn by a customer's request is taken out. The reception unit 200 may be connected to the first branch conveyance path 431 through a sixth branch conveyance path 436 which will be described later. When a customer deposits a medium, the reception unit 200 may transfer the deposited medium, through the sixth branch conveyance path 436, the first branch conveyance path 431 and the upper conveyance path 410, to the identification unit 300. In addition, the reception unit 200 may be connected through a seventh branch conveyance path 437 to a front side connection point at which the upper conveyance path 410 and a lower conveyance path 420 are connected.

The identification unit 300 may recognize the medium as any one of a normal banknote, a rejection banknote, and a non-replenishment banknote, by identifying whether the medium moving along the conveyance path has an abnormality. In this specification, mediums may be divided into normal banknotes, rejection banknotes, or non-replenishment banknotes. The normal banknote is a replenishment banknote to be replenished in the automated teller machine 10 or a recovery banknote to be recovered from the automated teller machine 10 to the transit cassette 800.

In addition, the rejection banknote is an abnormal banknote, and may be a damaged or forged banknote or paper other than a banknote. For example, the rejection banknote may be a torn banknote, a forged banknote, or a receipt. Further, the rejection banknote may include a normal banknote that was not damaged in the recycle cassette 500 and the transit cassette 800 but is damaged while moving along the conveyance path, and a normal banknote that was not damaged when stored in the temporary holding unit 100 but is damaged while moving along the conveyance path after taken out from the temporary holding unit 100.

Furthermore, the non-replenishment banknote is a normal banknote that is not needed to be replenished since a sufficient amount of medium, which satisfies a preset quantity, is stored in the automated teller machine 10. For example, the non-replenishment banknote may be a banknote, among the replenishment banknotes in the transit cassette 800, which is not replenished since the number of the mediums stored in the automated teller machine 1 comes to satisfy the preset quantity due to a customer's deposit while a person of a management company goes to replenish mediums.

The conveyance path may transfer mediums between the temporary holding unit 100, the identification unit 300, the reception unit 200, the recycle cassette 500, the reject cassette 600, the transit cassette 800, and the utility cassette 910. The conveyance path may include a driving roller, a driven roller, a switch gate and the like for transferring the mediums. Further, the conveyance path may be driven by a motor (not shown), and may be controlled by the control unit 700. The conveyance path may include an upper conveyance path 410, a lower conveyance path 420, a first branch conveyance path 431, a second branch conveyance path 432, a third branch conveyance path 433, a fourth branch conveyance path 434, a sixth branch conveyance path 436 and a seventh branch conveyance path 437.

The recycle cassette 500 may store the medium recognized as a normal banknote by the identification unit 300. The medium stored in the recycle cassette 500 may be taken out through the transit cassette 800 when recovery is required, and may be taken out through the reception unit 200 when a customer requests withdrawal. A plurality of the recycle cassettes 500 may be provided. The mediums may be separated and stored in the plurality of recycle cassettes 500 for each type of banknote.

The reject cassette 600 may store a damaged medium (e.g., a rejection banknote). In the present embodiment, when mediums in the transit cassette 800 are replenished in the automated teller machine 10, a medium recognized as the rejection banknote by the identification unit 300 may be accommodated in the utility cassette 910. The utility cassette 910 may be understood as a cassette in which various types of mediums can be stored for universal purposes. The utility cassette 910 may be positioned on a lower front portion of the safe to be positioned adjacent to the transit cassette 800.

In the present embodiment, the utility cassette 910 is positioned in the lower front lower portion of the safe, but the present disclosure is not limited thereto, and the utility cassette 910 may be detachably mounted at an upper rear portion of the safe.

The control unit 700 may be implemented by a calculation device including a microprocessor, a measuring device such as a sensor, and a memory. Since the implementation method is obvious to those skilled in the art, a specific description thereof will be omitted. Hereinafter, the control method of the control unit 700 will be described in detail.

In order to replenish the recycle cassette 500 with a medium stored in the transit cassette 800, the control unit 700 may control the conveyance path such that the medium stored in the transit cassette 800 is replenished to the recycle cassette 500.

For example, the control unit 700 may control the fourth branch conveyance path 434 and the upper conveyance path 410 such that the medium stored in the transit cassette 800 is transferred to the identification unit 300. Then, the control unit 700 may control the conveyance path such that the mediums recognized in the identification unit 300 are transferred to different places depending on the state of each medium recognized by the identification unit 300.

For example, when the medium is recognized as a normal banknote by the identification unit 300, the control unit 700 may control the upper conveyance path 410 and the second branch conveyance path 432 such that the medium recognized as a normal banknote in the identification unit 300 is transferred to the recycle cassette 500. In addition, when the medium is recognized as a rejection banknote by the identification unit 300, the control unit 700 may control the upper conveyance path 410, the lower conveyance path 420 and the third branch conveyance path 433 such that the medium recognized as a rejection banknote in the identification unit 300 is transferred to the utility cassette 910. Further, when the medium is recognized as a non-replenishment banknote by the identification unit 300, the control unit 700 may control the upper conveyance path 410 and the fourth branch conveyance path 434 such that the medium recognized as a non-replenishment banknote is transferred to the transit cassette 800.

Hereinafter, the medium management method in the financial transaction system according to one embodiment of the present disclosure will be described.

In the medium management method of the financial transaction system, information on the types of mediums and the number of each type of mediums may be input in the memory of the transit cassette 800, and when the mediums in the transit cassette 800 are replenished in the automated teller machine 10, the information on the type and the number of mediums provided by the transit cassette 800 may be utilized for replenishment of mediums and current calculation of mediums.

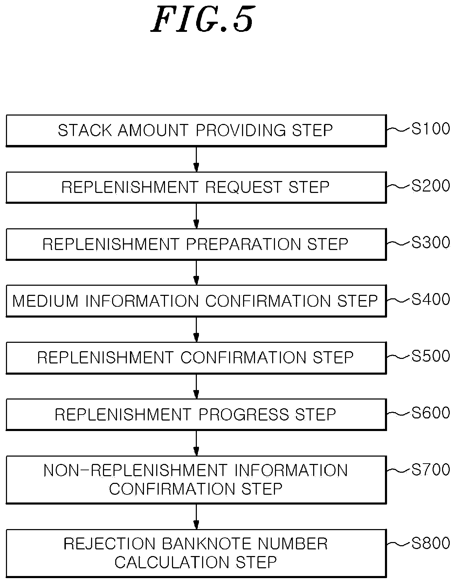

As shown in FIG. 5, the medium management method of the financial transaction system may include a stack amount providing step (S100), a replenishment request step (S200), a replenishment preparation step (S300), a medium information confirmation step (S400), a replenishment confirmation step (S500), a replenishment progress step (S600), a non-replenishment information confirmation step (S700) and a rejection banknote number calculation step (S800).

In the stack amount providing step (S 100), the automated teller machine 10 may provide medium stack information for a stack amount of mediums to the bank server in real time. The medium stack information may be understood as information on the amount of mediums accommodated in the safe.

In the replenishment request step (S200), the bank server 20 may calculate provisional replenishment number information for mediums required for replenishment of the automated teller machine 10 based on the medium stack information. The provisional replenishment number information is a difference value between stack amount information corresponding to an appropriate level of mediums accommodated in the automated teller machine 10 (appropriate stack information) and the medium stack information obtained by comparing the appropriate stack information and the medium stack information, which may be calculated by the bank server 20.

Further, in the replenishment request step (S200), when the provisional replenishment number information of medium is calculated, the bank server 20 may request replenishment by providing the calculated provisional replenishment number information to the medium management unit 30.

In the replenishment preparation step (S300), the medium management unit 30 may accommodate mediums required for the replenishment transaction in the transit cassette 800 based on the provisional replenishment number information. In addition, the medium management unit 30 may input the provisional replenishment number information in the transit cassette 800.

In the medium information confirmation step (S400), when the transit cassette 800 is connected to the automated teller machine 10, the transit cassette 800 may provide the provisional replenishment number information to the automated teller machine 10. In this case, the automated teller machine 10 may provide current medium stack information to the bank server 20.

In the replenishment confirmation step (S500), the bank server 20 may calculate actual replenishment number information for mediums required to be replenished in the automated teller machine 10 based on the current medium stack information received from the automated teller machine 10. The actual replenishment number information is a difference value between the appropriate stack information and the current medium stack information, which may be calculated by the bank server 20. The calculated actual replenishment number information may be provided to the automated teller machine 10.

In the replenishment progress step (S600), the automated teller machine 10 may be replenished with the mediums from the transit cassette 800 by an amount of mediums obtained based on the actual replenishment number information. In addition, the automated teller machine 10 may recover non-replenishment banknotes that need not to be replenished to the transit cassette 800.

In the replenishment progress step (S600), when the mediums in the transit cassette are replenished in the automated teller machine 10, the automated teller machine 10 may control the conveyance path for the medium in the automated teller machine 10 so that the mediums are to be replenished by the amount of mediums obtained based on the actual replenishment number information. In addition, the automated teller machine 10 may control the conveyance path so that the mediums as the non-replenishment banknotes that need not to be replenished in the automated teller machine 10 are recovered in the transit cassette 800. Further, the automated teller machine may provide information on the number of the non-replenishment banknotes recovered in the transit cassette 800 to the bank server 20.

In the non-replenishment information confirmation step (S700), the transit cassette 800 may be transferred to the medium management unit 30, and the medium management unit 30 may confirm the non-replenishment banknote number information for the non-replenishment banknotes recovered in the transit cassette 800.

In the rejection banknote number calculation step (S800), the number of rejection banknotes remaining in the automated teller machine 10 may be calculated based on the provisional replenishment number information, the actual replenishment number information, and the non-replenishment banknote number information.

In the rejection banknote number calculation step (S800), a difference value obtained by subtracting the actual replenishment number information and the non-replenishment banknote number information from the provisional replenishment number information may be calculated as the replenishment rejection banknote number information for the rejection banknotes remaining in the utility cassette of the automated teller machine.

As described above, according to the embodiment of the present disclosure, the provisional replenishment number information such as the types of mediums and the number of each type of mediums is input in the memory of the transit cassette 800, so that, when the automated teller machine 10 is replenished with mediums through the transit cassette 800, the provisional replenishment number information provided by the transit cassette 800 may be used for replenishment of mediums and current calculation of mediums. Further, it is possible to determine the exact number of rejection banknotes accommodated in the automated teller machine 10. Accordingly, when performing the current calculation of mediums after the replenishment of mediums for the automated teller machine 10 is completed, it is possible to compare the calculation result of the bank server and the actual calculation result to confirm the accurate comparison.

The examples of the present disclosure have been described above as specific embodiments, but these are only examples, and the present disclosure is not limited thereto, and should be construed as having the widest scope according to the technical spirit disclosed in the present specification. A person skilled in the art may combine/substitute the disclosed embodiments to implement a pattern of a shape that is not disclosed, but it also does not depart from the scope of the present disclosure. In addition, those skilled in the art can easily change or modify the disclosed embodiments based on the present specification, and it is clear that such changes or modifications also belong to the scope of the present disclosure.

## Claims

1. A financial transaction system comprising:
an automated teller machine that stores mediums for deposit or withdrawal of a customer and provides medium stack information for a stack amount of the mediums;
a bank server that calculates provisional replenishment number information for mediums required to be replenished in the automated teller machine based on the medium stack information received from the automated teller machine; and
a medium management unit that prepares a transit cassette containing mediums required in replenishment transaction based on the provisional replenishment number information provided from the bank server, and inputs the provisional replenishment number information in a memory of the prepared transit cassette,
wherein when the mediums in the transit cassette are replenished in the automated teller machine, the bank server calculates actual replenishment number information for mediums required to be replenished in the automated teller machine based on current medium stack information received from the automated teller machine, and provides the calculated actual replenishment number information to the automated teller machine, and
wherein the automated teller machine controls a conveyance path for the mediums so that the mediums are replenished from the transit cassette based on the actual replenishment number information and mediums as non-replenishment banknotes which need not to be replenished in the automated teller machine are recovered to the transit cassette, and provides non-replenishment banknote number information for the non-replenishment banknotes recovered in the transit cassette to the bank server.

2. The financial transaction system of claim 1, wherein the bank server calculates replenishment rejection banknote information for rejection banknotes remaining in the automated teller machine based on the provisional replenishment number information, the actual replenishment number information, and the non-replenishment banknote number information.

3. The financial transaction system of claim 1, wherein the bank server compares a preset appropriate stack information for mediums in the automated teller machine and the medium stack information and calculates a difference value between the appropriate stack information and the medium stack information as the provisional replenishment number information.

4. The financial transaction system of claim 1, wherein the automated teller machine comprises:
a safe having an entrance for replenishment and recovery to which a transit cassette is to be connected;
a reception unit through which deposit or withdrawal of a medium is made;
an identification unit serving to identify whether a medium is a normal banknote, a rejection banknote, or a non-replenishment banknote;
a recycle cassette in which the medium recognized as the normal banknote is to be stored;
a utility cassette in which various types of mediums are to be stored for universal purposes;
a conveyance path through which the medium is conveyed between the entrance for replenishment and recovery, the reception unit, the identification unit, the recycle cassette, and the utility cassette; and
a control unit configured to control the conveyance path such that when the medium is recovered through the transit cassette, among mediums stored in the transit cassette, the medium recognized as the normal banknote by the identification unit is accommodated in the recycle cassette, the medium recognized as the rejection banknote by the identification unit is accommodated in the utility cassette and the medium recognized as the non-replenishment banknote by the identification unit is recovered to the transit cassette.

5. The financial transaction system of claim 4, wherein the bank server calculates a difference value obtained by subtracting the actual replenishment number information and the non-replenishment banknote number information from the provisional replenishment number information as replenishment rejection banknote number information for rejection banknotes remaining in the utility cassette.

6. A medium management method in a financial transaction system, comprising:
a stack amount providing step in which an automated teller machine provides medium stack information for a stack amount of mediums to a bank server;
a replenishment request step in which the bank server calculates provisional replenishment number information for mediums required to be replenished in the automated teller machine based on the medium stack information, and provides the calculated provisional replenishment number information to a medium management unit to request replenishment of mediums;
a replenishment preparation step in which the medium management unit accommodates mediums required for replenishment transaction in a transit cassette based on the provisional replenishment number information, and inputs the provisional replenishment number information in the transit cassette;
a medium information confirmation step in which when the transit cassette is connected to the automated teller machine, the transit cassette provides the provisional replenishment number information to the automated teller machine, and the automated teller machine provides current medium stack information to the bank server;
a replenishment confirmation step in which the bank server calculates actual replenishment number information for mediums required to be replenished in the automated teller machine based on the current medium stack information, and provides the calculated actual replenishment number information to the automated teller machine;
a replenishment progress step in which the automated teller machine is replenished with mediums from the transit cassette based on the actual replenishment number information, and non-replenishment banknotes that need not to be replenished are recovered to the transit cassette; and
a non-replenishment information confirmation step in which the medium management unit confirms non-replenishment banknote number information for the non-replenishment banknotes recovered in the transit cassette.

7. The medium management method of claim 6, further comprising:
a rejection banknote number calculation step of calculating the number of rejection banknotes remaining in the automated teller machine based on the provisional replenishment number information, the actual replenishment number information, and the non-replenishment banknote number information.

8. The medium management method of claim 6, wherein the replenishment request step includes comparing a preset appropriate stack information for mediums in the automated teller machine and the medium stack information and calculating a difference value between the appropriate stack information and the medium stack information as the provisional replenishment number information.

9. The medium management method of claim 6, wherein the replenishment progress step includes controlling, when the mediums in the transit cassette are replenished in the automated teller machine, a conveyance path in the automated teller machine so that the mediums are replenished from the transit cassette by an amount of mediums obtained based on the actual replenishment number information and mediums as non-replenishment banknotes which need not to be replenished in the automated teller machine are recovered to the transit cassette, and providing non-replenishment banknote number information for the non-replenishment banknotes recovered in the transit cassette to the bank server

10. The medium management method of claim 7, wherein the rejection banknote number calculation step includes calculating a difference value obtained by subtracting the actual replenishment number information and the non-replenishment banknote number information from the provisional replenishment number information as replenishment rejection banknote information for rejection banknotes remaining in the automated teller machine.
